# EUROPEAN PATENT SPECIFICATION

(11) **EP 1 020 716 B1**
(45) Date of publication and mention of the grant of the patent: **28.08.2002**
(21) Application number: 00300221.9
(22) Date of filing: 13.01.2000
(51) Int. Cl.: G01L 3/10, G01L 1/25, G01L 5/00

(54) **Method and apparatus for torque measurement**
Verfahren und Vorrichtung zur Drehmomentmessung
Procédé et dispositif de mesure de couple

(30) Priority: 13.01.1999 GB 9900706
(43) Date of publication of application: 19.07.2000
(73) Proprietor: SOLARTRON GROUP LIMITED, Farnborough, Hampshire GU14 7PW (GB)
(72) Inventor: Gester, Matthias, Farnborough GU14 6NJ (GB); Kulczyk, Konrad, Frimley GU16 5LY (GB)
(74) Representative: Vleck, Jan Montagu

(56) References cited:
- US-A- 4 080 836
- US-A- 5 170 366
- US-A- 5 172 591
- US-A- 5 585 571
- US-A- 5 604 314
- US-A- 5 813 280

## Description

The present invention relates to a method and apparatus for the measurement of torque.

The measurement of torque provides information on the forces acting on static structural members, the friction between one moving and one static structural member, or the power transmitted via rotating members. This information makes it possible to control the performance of a great variety of mechanical tools and machines in terms of efficiency and reliability.

Torque measurement is based on the elasticity of the material of the torque bearing member. The torsional stresses resulting from an applied torque can be detected either from the angular deflection or twist over a dedicated section of the torque bearing member or from the strain at the surface of the torque bearing member. A variety of methods for measuring torque on static and rotating torque bearing members have been previously proposed.

If torque is determined from the twist of a torque bearing member, the relative angular displacement is measured between two ends of a dedicated segment of the torque bearing member referred to as the torsion bar. In one embodiment, pulsed signals may be generating using periodical markings around the circumference on either end of the torsion bar. In this case, the torque can be determined from the phase shift between the two periodic signals generated either optically (see, for example (U.S.Pat. No. 3,940,979) or magnetically (variable reluctance).

In another embodiment, a tubular structure is attached to each end of the torsion bar so that these tubular structures surround the torsion bar and overlap in the centre of the same. Torque can be determined from the relative concentrical displacement of the two tubular structures in the overlap region using optical (see, for example, U.S. Pat.No. 5,606,137) capacitive (see, for example, Turner J.D. "Development of a rotating-shaft torque sensor for automotive applications", IEE Proceedings, vol 135 pt. D No. 5, p.334 (1980), or inductive (see, for example, Krimmel W., "Induktiver Aufnehmer mit Zukunft", Messen, Prüfen, Automatisieren, p.614 [1985]) gauges and the control electronics using either slip rings or telemetric means.

It is an object of preferred embodiments of the present invention to provide method and apparatus for measuring torque in static or rotating torque bearing members which can be fitted to any torque bearing member without any further modification even when the torque bearing member is already in operation.

It is another object of preferred embodiments of the present invention to provide method and apparatus for measuring torque in static or rotating torque bearing members which is small in dimensions since no torsion bar is required.

It is still another object of preferred embodiments of the present invention to provide method and apparatus for measuring torque in static or rotating torque bearing members which operates in the time domain and hence is less susceptible to noise and variations in input electric power or output signal strength.

The present invention provides method and apparatus for measuring torque in static or rotating torque bearing members which determines the torque by measuring the torsional stress directly in a solid or hollow torque bearing member using acoustic waves generated in and propagating through the torque bearing member. This method and apparatus exploits the change of acoustic velocity in a stressed medium, the so-called acousto-elastic effect (described in for example, Smith R.T. "Stress induced anisotropy in solids - The acousto-elastic effect", Ultrasonics, p.135, vol. July-September (1963))

The acousto-elastic effect is the effect whereby the speed of propagation of acoustic waves through a material is affected by the stress to which the material is subjected. The speed of propagation through a material subjected to a compressive stress (or in a direction in which a compressive stress component acts) is greater than the speed through an unstressed material all other things being equal. The speed of propagation through a material subjected to a tensile stress (or in a direction in which a tensile stress component acts)is lower than the speed through an unstressed material or a material under compressive stress. Similarly, the speed of propagation of a polarised wave is greater when the direction of polarisation is subject to a compressive stress.

By comparing the velocity changes for two acoustic shear waves with different polarisation propagating along the same path (acoustic birefringence) temperature effects can be eliminated. The same is possible if two acoustic waves with the same polarisation propagate along different directions with respect to a direction of principle stress. Depending on the application and material of the torque bearing member, the appropriate acoustic waves may be generated and detected by means of one or more piezoelectric transducers, electromagnetic acoustic transducers (EMAT), a pulsed laser source, or a combination thereof.

According to the present invention there is provided a method of measuring the torque transmitted by a torque bearing member comprising generating two acoustic waves or wave pulses travelling through at least part of the torque bearing member and/or along or near to the surface of the torque bearing member, the propagation velocities of the waves or wave pulses being affected differently by stresses resulting from an applied torque, and measuring the difference in velocity of the waves or wave pulses, by determining the difference in time taken for the waves or wave pulses to travel a predetermined distance.

The acousto-elastic effect is described in more detail in Smith R.T. " Stress induced anisotropy in solids - The acousto-elastic effect", Ultrasonics, p.135 and vol. July-September 1963".

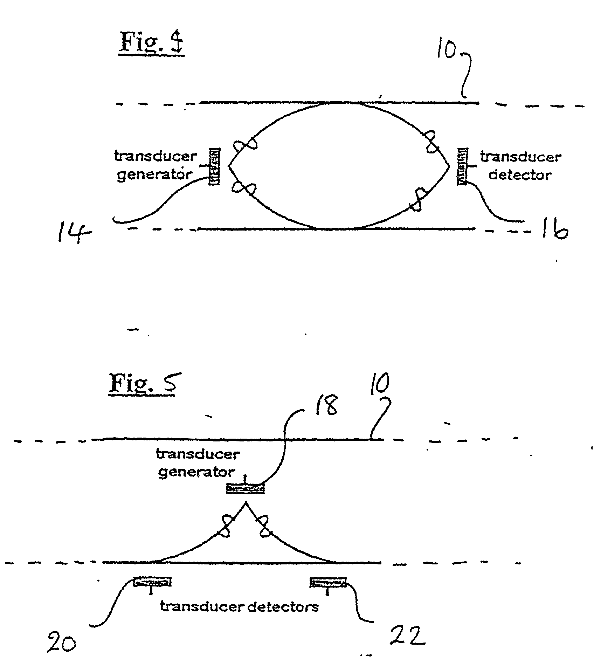

Some embodiments of the invention make use of shear wave birefringence. Shear wave birefringence is the effect whereby a single radially polarised shear wave(i.e a wave having no specific polarisation or a mixed polarisation) propagated into a material under stress is divided into two orthogonally polarised wave pulses polarised in directions parallel to the stress principal axes (see figure 3)

Shear wave birefringence for the non-destructive evaluation of stress in static elements using the acoustic-elastic effect is known and is discussed in, for example, US 4,080,836 (Thompson et al) and US 4,522,077 (Thompson) and N.N. Hsu "Proceedings of a Workshop on Nondestructive Evaluation of Residual Stress" Aug 13-14, 1975 published by NTIAC, San Antonio, Texas, USA.

Thompson et al (US 4,080,836) discloses a system for measuring residual stresses in static blocks resulting from their manufacture or production. Thompson et al uses shear wave birefringence to generate two orthogonally polarised waves travelling along a common path. This technique is based upon measuring the difference in velocity of the two waves through the plate of static test material. Shear wave birefringence means that the two wave pulses are polarised in directions parallel to the principal stress axes and this means that the acoustic-elastic effect is maximised.

Thompson (US 4,522,077) discloses a system whereby residual stress in a flat plate is measured by comparing the velocities of two horizontally (i.e. parallel to the surface of the plate being tested) polarised and horizontally propagating shear waves with inter-changed directions of propagation and polarisation. The apparatus disclosed in Thompson comprises two periodic permanent magnet-electromagnetic acoustic transducers separated by and fixed to a spacer bar of known length. One of the transducers is arranged to transmit an ultrasonic shear wave along the line connecting the two transducers whereas the other transducer detects the wave transmitted by the first transducer. The time for a wave to propagate between the transducers is measured and two velocity measurements of orthogonal directions are obtained by placing the apparatus on the surface of a structural element to be tested first in a direction parallel to one stress principal axis and then in a direction perpendicular thereto.

Thompson and Thompson et al are both concerned only with the non-destructive one-off testing of large static civil engineering elements.

The inventors were the first to realise that effective continuous measurement of torque in shafts is possible using techniques previously only used in connection with the non-destructive one-off testing of structural elements in civil engineering applications such as bridges, buildings and transportation.

The inventors have appreciated that at least some of the objects of the preferred embodiments of the invention are achieved by taking the counter-intuitive step of importing techniques known in the field of one-off testing for stresses in static civil engineering elements having flat surfaces to the field of continuously measuring torque in mechanical engineering elements in dynamic situations.

The inventors of the subject application have also appreciated that in order for effective measurements of torque to be made using the acousto-elastic effect, it is necessary to measure the difference in velocity of two waves whose velocities are affected differently by the stresses resulting from an applied torque.

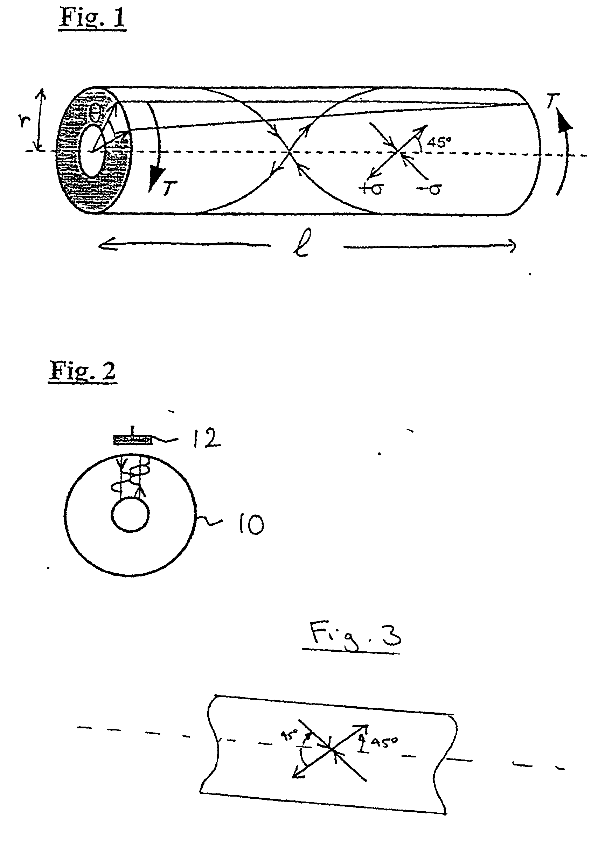

The application of torque to a shaft creates torsional stress which can be represented by (or is equivalent to) two orthogonal principal directions of tensile stress 1 and compressive stress 2 forming helices at 45° with respect to the longitudinal axis 4 of the shaft. Figure 1 shows these two principal directions of stress σ on a shaft 10 of length *1*, and radius *r* to which a torque *T* is applied. The inventors of the subject application have appreciated that the effect on the velocity of acoustic waves of these compressive and tensile stresses can be used to measure the torque represented by the stresses.

US-A-5 813 280 (Johnson et al.) discusses that it was considered inappropriate to measure torque or force using measurements of time of flight characteristics of waves generated in a load bearing member. US-A-5 813 280 discloses a system for measuring forces (including axial stress and torque) applied to distal sections of a cylindrical body having a central section and two distal sections. In US-A-5 813 280 standing resonant ultrasonic waves are generated in the central section of a load-bearing member. The standing waves are trapped in the central section of the load-bearing member and decay exponentially in the distal sections. An electromechanical acoustic transducer (EMAT) can be used to excite and detect the selected resonant modes in the central section. Force applied to the distal sections, including axial stress and torque, alter the resonant frequencies of the selected modes.

US 5,170,366 (Passarelli) proposes a system for measuring load in truck axles by measuring the elapsed time an ultrasonic sound wave requires to travel from a transmitting transducer to a receiving transducer. Whilst this patent discusses how the system may measure loads such as forces, torques, moments, stresses and strains it also discusses how it is only concerned with torque or bending moment measurement where these equate to a force acting over a bending arm such as a truck axle. In other words Passarelli is not concerned with the measurement of torque at all but simply with downward loads or forces. This is borne out by the fact that Passarelli will not measure applied torque.

The system of Passarelli includes receiving and transmitting transducers placed on the top of a traverse axle and between which an acoustic wave travels parallel to the axle longitudinal axle. This arrangement cannot measure the torque or torsion to which the axle is subjected as the selected direction of propagation parallel to the axle longitudinal axle is one which bisects the principal stress axes resulting from an applied torque. This means that the acousto-elastic effects of the compressive and tensile stresses resulting from an applied torque cancel each other out when acting on a wave propagating in the direction as proposed in Passarelli and do not therefore give a measurable effect from which applied torque can be calculated.

US-A-5 172 591 (Bohon) discloses a device for measuring the absolute load on an oil well sucker rod. Bohon like Passarelli does not disclose a device for measuring torque. Bohon discloses a system in which an applied load is determined by measuring the time taken for an acoustic wave to travel through a loaded portion of the sucker rod with a known length. The time taken depends on the force applied. A measurement of the applied force is then accomplished by comparing the time taken for the wave to travel through the loaded rod with the time taken to travel through the unloaded rod.

The inventors of the subject application are the first to have appreciated that effective torque measurement is possible provided that two waves or wave pulses differently affected by applied stress are used and the difference in their velocity measured. In a preferred embodiment of the invention waves or wave pulses are generated which travel parallel to the directions of the principal stresses so as to maximise the measurable acoustic-elastic effect.

The significant inventive step taken by the inventors of the subject invention is illustrated by the fact that although others have proposed the measurement of torque using the acousto-elastic effect no workable systems have been proposed. The inventors are the first to overcome the significant technical prejudice against using two waves and measuring the difference in their velocity as was done in the very dissimilar field of testing of civil engineering elements. The inventors are also the first to appreciate the significant advantages of selecting wave propagation directions at substantially ± 45° to the shaft longitudinal axis.

Preferred features of the method are set out in the dependent claims to which reference should now be made.

The invention also provides torque measuring apparatus for measuring the torque transmitted by a shaft, the apparatus comprising a wave generator for generating two acoustic waves or wave pulses through at least part of the shaft or along the surface of the shaft and means for measuring the difference in time taken for the waves or wave pulses to travel a predetermined distance. Preferred features of the apparatus are defined in the dependent claims 10 to 13 to which reference is now made.

The invention may be carried into practice in various ways but embodiments will now be described by way of example only with reference to the accompanying drawings in which:
Figure 1 shows schematically a torque transmitting shaft of the kind with which the present invention is concerned;
Figure 2 shows in a part-sectional schematic view a shaft and apparatus according to a first embodiment of the present invention;
Figure 3 shows schematically a top plan view of the wave pulses travelling through the shaft in figure 2 ;
Figure 4 shows schematically a portion of a shaft and apparatus according to a second embodiment of the present invention;
Figure 5 shows schematically a portion of a shaft and apparatus according to a third embodiment of the present invention; and
Figure 6 is a graph showing the results of an experiment with apparatus similar to that of figure 4 for measuring the torque applied to a 1.5 inch diameter hollow austenitic steel shaft.

The torque measurement systems of the present invention simultaneously generate two waves or wave pulses which are transmitted either into the shaft or along the surface. The systems further comprise means for detecting reflected and/or transmitted waves or wave pulses.

In a first embodiment of the invention (see figure 2) a wave generator 12 is located against or near the surface of a hollow shaft 10. The wave generator 12 transmits a wave or waves into the shaft along a radius and detects the wave or waves reflected back from the boundary formed by the inner circumference 13 of the shaft.

In the case of waves or wave pulses having a radius of the shaft 10 as their direction of propagation, a single wave of no specific polarisation can be generated. Such a wave would be a wave of mixed polarisation or a radially polarised wave (i.e. a wave having all transverse polarisations) The birefringence effect then means that this wave is split into two component orthogonally polarised waves or wave pulses 3. These component wave pulses are polarised in directions parallel to each of the two axes 1,2 of principal stress to which the shaft is subjected and are therefore sensitive to these stresses. The acousto-elastic effect then means that the velocity of the differently polarised component will be differently affected by the applied stresses; one will be slowed down by being polarised in a direction parallel to the principal tensile stress 1 and the other speeded up by virtue of being polarised in a direction parallel to the principal compressive stress 2.

Thus a single pulse being polarised in such a way that its polarisation can be described as a superposition of two pulses 3 having transverse polarisation, orthogonal with respect to each other, will split into two separate pulses having orthogonal polarisation with respect to each other when travelling along the diameter and having different velocities of propagation. This will give rise to a time delay between the two pulses when travelling a predetermined distance. Thus after propagating a predetermined distance the time delay is a function of the torsional stresses in the shaft, and therefore of the applied torque.

It should be noted that since the two pulses have a common propagation path the time delay is unaffected by the temperature of the shaft and local inhomogeneities in the shaft material, since both pulses experience the same effect. Furthermore in the case of rotating shafts the time delay is also unaffected by the direction and speed of rotation of the shaft.

Figure 2 shows in simple schematic form a part-sectional view of a hollow torque transmitting shaft 10 in which bulk transverse acoustic waves 3 are deployed along a radius of a shaft. Located above the shaft and spaced therefrom is a transducer 12 which generates a transverse acoustic pulse containing two orthogonal polarisation components in the shaft. The pulses are depicted travelling from the outer surface of the shaft, along a diameter, and reflecting from an inner wall 13 of the shaft, back to the transducer 12. Although for ease of visibility the propagation paths for the outward and return journeys are shown adjacent, the paths are in fact substantially identical.

An appropriate wave pulse may be generated using an electromagnetic acoustic transducer (EMAT) such as that described in US 4,080,836. This EMAT may consist of a spiral coil backed by a magnet which generates a field perpendicular to the shaft surface. As shown in figure 3, the birefringence effect means that such a wave pulse, on passage into the shaft under torque, divided into two component orthogonally polarised wave pulses3 polarised in direction parallel to the stress principal axis 1,2.

If torque is applied to the shaft, in whichever direction, the two pulses will arrive back at the shaft surface at different times. The time difference is a function of the applied torque. The transducer might be of the order of a few centimetres in circumference and the acoustic pulses take a matter of microseconds to make their journey. The time delay between reception of the reflected pulses is of the order of nanoseconds which is detectable and measurable. The time delay increases continuously with increasing torque.

Suitable electronic measuring equipment (not shown) is employed to measure the time delay of the pulses detected by the transducer 12.

The transducer 12 of Figure 2 is an electromagnetic acoustic transducer (EMAT) typically consisting of a coil and a permanent magnet (neither shown). When a current is passed through the coil eddy currents are generated in the nearby metallic surface of the shaft 10. In the static magnetic field of the permanent magnet these eddy currents are subjected to Lorentz forces which are transferred from the electrons to the metal ions through collision processes and thus generate an elastic ultrasonic wave which propagates through the sample. This process is reversible and hence the EMAT can also be used to detect the returning wave.

As an alternative, acoustic waves could be generated by a pulsed laser source, similarly spaced from the shaft, or else by a piezoelectric transducer mounted on the shaft. An advantage of using EMATs, lasers, optical detection means to transmit and/or receive waves is that no physical contact with the shaft is required and thus the apparatus can be used to measure torque on a rotating shaft.

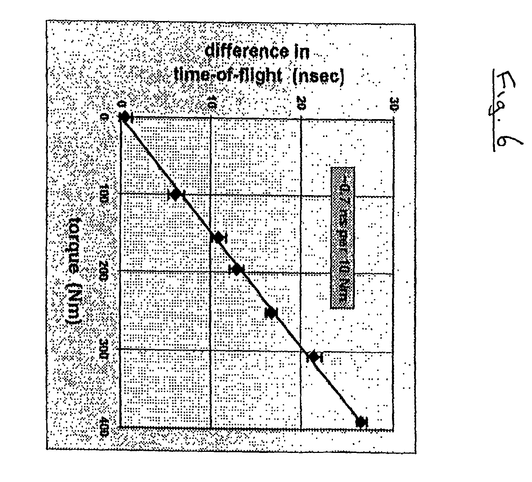

In the case of acoustic wave pulses propagating parallel to the cylindrical surface of a stressed shaft 10, a difference in their acoustic velocities arises if the pulses travel along propagation paths which experience different stresses. In a preferred arrangement, two shear horizontal or SH acoustic wave pulses (i.e. wave pulses whose direction of polarisation is parallel to the surface of the shaft) are launched simultaneously and travel along different paths just beneath the shaft surface (i.e close enough to the surface for polarisation perpendicular to the surface to not be possible ) and having the same predetermined distance so that the detected time delay is a function of the torsional stress in the shaft, and therefore of the applied torque. One pulse may travel along the helical line 1 of principal tensile stress and the other one of the two pulses may travel along the helical line 2 of principal compressive stress (see figures 4 and 5). The difference in velocity can be determined from the time required by each pulse to travel a predetermined distance and this difference in velocity is a function of the torsional stress in the shaft, and therefore of the applied torque.

Figure 4 shows an embodiment of the invention in which transverse shear horizontal acoustic wave pulses are deployed parallel to and just below (or along) a cylindrical surface of the shaft. A first EMAT 14 is used to generate the pulses 5 which propagate along the helical principal directions 1,2 of stress on the surface of the shaft. A second EMAT 16, positioned further along the shaft at a point where the two helical propagation paths cross, detects the pulses and again the time delay due to applied stress can be measured. In this embodiment the torque applied to rotating shafts can be derived from the time delay between the pulses only if the rotation speed and direction of the shaft is known since the rotation speed will have an effect on the time delay.

Figure 5 shows an alternative embodiment again using transverse SH waves travelling and being polarised parallel to the shaft surface in which a first EMAT 18 is used to generate the pulses 5 which propagate along the two helical principal directions of stress in opposed axial directions on the surface of the shaft. Two further EMATs 20 and 22, positioned further along the shaft at the same distance in opposite directions detect the pulses and again the time delay and the applied torque can be measured. In this embodiment the effect of the rotation speed of the shaft on the propagation velocities need not be known as it is the same for both pulses.

The shear waves travelling along helical surface paths 1,2 at 45° to the longitudinal axis of the shaft (i.e. along the lines of principal tensile and compressive stress) can be generated using an EMAT consisting of a meander-shaped coil backed by an array of periodic permanent magnets (PPM-EMATs) as described in G. Hubschen "Elektromagetische Ultraschallwandler zur Erzeugung horizontal polariserter Transversalwellen", Chapter 5 in "Ultrasshall prüfung von austenitischen Plalfiereigen, Mischnähten und austenitischen Schweissnähten", published by Expert Verlag. Similar EMATs may be used to detect or receive the generated or transmitted waves or wave pulses.

As described above for the embodiment of figures 2 and 3, in the embodiment of figures 4 or 5 appropriate wave pulses may also be generated or detected using piezoelectric devices, pulsed laser sources, optical detection devices, or a combination of these with or without EMATs.

Note that in the case of acoustic wave pulses travelling parallel to the surface of the shaft the predetermined length of the propagation paths can be selected to be many centimetres and therefore the journey time is longer allowing a better resolution of smaller time delays.

The efficiency of generating and detecting ultrasonic waves depends upon the material of the shaft. If the shaft is made of a material of low efficiency a disc of high efficiency material may be inserted into the shaft in such a way that it experiences the same torque (or a torque proportional to) that applied to the shaft. Acoustic waves may be made to propagate in or on the disc rather than the shaft(or a proportional) torsion measurement efficiency can be improved.

In all of the above described embodiments some calibration is required initially. The theoretical relationship in a three-dimensional system between applied torque and the measured acoustic velocity differences is complicated one. The system of the present invention is therefore calibrated by measuring the acoustic velocity differences which result from applying known torques and extrapolating or interpolating from these to obtain a full relationship between applied torque and acoustic velocity difference for the range of applied torque of interest.

## Claims

1. A method of measuring the torque transmitted by a torque bearing member (10) comprising generating two acoustic waves or wave pulses (3,5) travelling through at least part of the torque bearing member (10), and/or along or near to the surface of the torque bearing member (10), the propagation velocities of the waves or wave pulses being affected differently by stresses resulting from an applied torque, and measuring the difference in velocity of the waves or wave pulses by determining the difference in time taken for the waves or wave pulses (3,5) to travel a predetermined distance.

2. A method according to claim 1 wherein the two waves or wave pulses (3) have directions of polarisation which are orthogonal to each other.

3. A method according to any of the preceding claims wherein the two waves or wave pulses (5) have directions of propagation which are different to each other.

4. A method according to claim 3 wherein the two waves or wave pulses are both propagated along the surface of the torque bearing member (10) in directions other than parallel or orthogonal to the longitudinal axis of the torque bearing member.

5. A method according to claim 3 or claim 4 wherein the two waves or wave pulses have directions of propagation which are orthogonal to each other.

6. A method according to claim 5 wherein the two waves or wave pulses (5) (3) are propagated parallel to the surface of the torque bearing member (10) in directions (1,2) at substantially 45° to the longitudinal axis of the shaft.

7. A method according to claim 2 wherein the two waves or wave pulses (3) have a common path which extends along a radius or part of a radius of the torque bearing member (10).

8. A method according to claim 7 comprising generating a single wave or wave pulse which splits into two orthogonally polarised component waves or wave pulses (3), said component waves or wave pulses forming the said two waves or wave pulses having directions of polarisation which are orthogonal to each other.

9. Torque measuring apparatus for measuring the torque transmitted by a torque transmitting member, the apparatus comprising a wave generator or wave generators (12, 14, 18) for generating two acoustic waves or wave pulses (3,5) through at least part of the torque transmitting member or along the surface of the torque transmitting member (10) and means for measuring the difference in time taken for the waves or wave pulses to travel a predetermined distance.

10. Apparatus according to claim 9 wherein the wave generator (12) comprises means for generating two waves or wave pulses having directions of polarisation which are orthogonal to each other.

11. Apparatus according to claim 9 or 10 wherein the wave generator (14,18) comprises means for generating two waves or wave pulses having directions of propagation which are different from each other.

12. Apparatus according to claim 11 wherein the wave generator (14,18) comprises means for generating two waves or wave pulses having directions (1,2) of propagation which are orthogonal to each other.

13. Apparatus according to claim 10 wherein the wave generator comprises means for generating two waves or wave pulses (3) having a common path.

14. Apparatus according to any of claims 9 to 13 further comprising a wave detector or wave detectors (12, 16, 22) for detecting the waves generated by the wave generator or generators, and a timing circuit for measuring the difference in time taken for the waves or wave pulses to travel from the wave generator or generators to the wave detector or detectors.

15. Apparatus according to any of claims 9 to 14 wherein a wave generator is one of an electromagnetic acoustic transducer, a piezoelectric transduces or a pulsed laser source.

16. Apparatus according to claim 15 wherein a wave detector is an electromagnetic acoustic transducer or a piezoelectric transducer.

## Patentansprüche

1. Verfahren zum Messen des Drehmomentes, das von einem Drehmomentlagerelement (10) übertragen wird, umfassend das Erzeugen von zwei Schallwellen oder -wellenimpulsen (3, 5), die durch wenigstens einen Teil des Drehmomentlagerelementes (10) und/oder entlang oder in der Nähe der Oberfläche des Drehmomentlagerelementes (10) wandern, wobei die Ausbreitungsgeschwindigkeiten der Wellen oder Wellenimpulse durch von einem beaufschlagten Drehmoment resultierende Belastungen unterschiedlich beeinflusst werden, und Messen der Geschwindigkeitsdifferenz der Wellen oder Wellenimpulse durch Ermitteln der Zeitdifferenz zwischen den Wellen oder Wellenimpulsen (3, 5) beim Zurücklegen einer vorbestimmten Distanz.

2. Verfahren nach Anspruch 1, bei dem die beiden Wellen oder Wellenimpulse (3) Polarisationsrichtungen haben, die orthogonal zueinander sind.

3. Verfahren nach einem der vorherigen Ansprüche, bei dem die beiden Wellen oder Wellenimpulse (5) Ausbreitungsrichtungen haben, die sich voneinander unterscheiden.

4. Verfahren nach Anspruch 3, bei dem sich die beiden Wellen oder Wellenimpulse entlang der Oberfläche des Drehmomentlagerelementes (10) in anderen Richtungen als parallel oder orthogonal zur Längsachse des Drehmoment lagerelementes ausbreiten.

5. Verfahren nach Anspruch 3 oder Anspruch 4, bei dem die beiden Wellen oder Wellenimpulse Ausbreitungsrichtungen haben, die orthogonal zueinander sind.

6. Verfahren nach Anspruch 5, bei dem sich die beiden Wellen oder Wellenimpulse (5) (3) parallel zur Oberfläche des Drehmomentlagerelementes (10) in Richtungen (1, 2) im Wesentlichen 45° zur Längsachse der Welle ausbreiten.

7. Verfahren nach Anspruch 2, bei dem die beiden Wellen oder Wellenimpulse (3) einen gemeinsamen Pfad haben, der über einen Radius oder einen Teil eines Radius des Drehmomentlagerelementes (10) verläuft.

8. Verfahren nach Anspruch 7, umfassend das Erzeugen einer einzelnen Welle oder eines einzelnen Wellenimpulses, die/der in zwei orthogonal polarisierte Wellenkomponenten oder Wellenimpulskomponenten (3) unterteilt werden, wobei die genannten Wellenkomponenten oder Wellenimpulskomponenten die genannten beiden Wellen oder Wellenimpulse mit Polarisationsrichtungen bilden, die orthogonal zueinander sind.

9. Drehmomentmessvorrichtung zum Messen des von einem Drehmomentübertragungselement übertragenen Drehmoments, wobei die Vorrichtung (einen) Wellengenerator(en) (12, 14, 18) zum Erzeugen von zwei Schallwellen oder -wellenimpulsen (3, 5) durch wenigstens einen Teil des Drehwellenübertragungselementes oder entlang der Oberfläche des Drehmomentübertragungselementes (10) sowie ein Mittel zum Messen der Zeitdifferenz umfasst, die die Wellen oder Wellenimpulse zum Zurücklegen einer vorbestimmten Distanz benötigen.

10. Vorrichtung nach Anspruch 9, bei der der Wellengenerator (12) ein Mittel zum Erzeugen von zwei Wellen oder Wellenimpulsen mit Polarisationsrichtungen umfasst, die orthogonal zueinander sind.

11. Vorrichtung nach Anspruch 9 oder 10, bei der der Wellengenerator (14, 18) Mittel zum Erzeugen von zwei Wellen oder Wellenimpulsen mit Ausbreitungsrichtungen umfasst, die sich voneinander unterscheiden.

12. Vorrichtung nach Anspruch 11, bei der der Wellengenerator (14, 18) Mittel zum Erzeugen von zwei Wellen oder Wellenimpulsen mit Ausbreitungsrichtungen (1, 2) umfasst, die orthogonal zueinander sind.

13. Vorrichtung nach Anspruch 10, bei der der Wellengenerator Mittel zum Erzeugen von zwei Wellen oder Wellenimpulsen (3) mit einem gemeinsamen Pfad umfasst.

14. Vorrichtung nach einem der Ansprüche 9 bis 13, ferner umfassend (einen) Wellendetektor(en) (12, 16, 22) zum Erfassen der von dem/den Wellengenerator(en) erfassten Wellen, und eine Zeitschaltung zum Messen der Zeitdifferenz, die die Wellen oder Wellenimpulse für ihren Weg von dem/den Wellengenerator(en) zu dem/den Wellendetektor (en) benötigen.

15. Vorrichtung nach einem der Ansprüche 9 bis 14, wobei ein Wellengenerator ein elektromagnetischer akustischer Messwandler, ein piezoelektrischer Messwandler oder eine pulsierte Laserquelle ist.

16. Vorrichtung nach Anspruch 15, bei der ein Wellengenerator ein elektromagnetischer akustischer Messwandler oder ein piezoelektrischer Messwandler ist.

## Revendications

1. Procédé de mesure du couple transmis par un élément porteur de couple (10) comprenant la génération de deux ondes ou impulsions d'ondes acoustiques (3, 5) se propageant à travers au moins une partie de l'élément porteur de couple (10), et /ou le long ou près de la surface de l'élément porteur de couple (10), les vitesses de propagation des ondes ou impulsions d'ondes étant affectées différemment par des contraintes résultant d'un couple appliqué, et de mesure de la différence de vitesse des ondes ou impulsions d'ondes en déterminant la différence entre les temps pris par les ondes ou impulsions d'ondes (3, 5) pour parcourir une distance prédéterminée.

2. Procédé selon la revendication 1, dans lequel les deux ondes ou impulsions d'ondes (3) ont des sens de polarisation qui sont orthogonaux l'un à l'autre.

3. Procédé selon l'une quelconque des revendications précédentes, dans lequel les deux ondes ou impulsions d'ondes (5) ont des sens de propagation qui sont différents l'un de l'autre.

4. Procédé selon la revendication 3, dans lequel les deux ondes ou impulsions d'ondes sont toutes les deux propagées le long de la surface de l'élément porteur de couple (10) dans des sens autres que parallèles ou orthogonaux à l'axe longitudinal de l'élément porteur de couple.

5. Procédé selon la revendication 3 ou la revendication 4, dans lequel les deux ondes ou impulsions d'ondes ont des sens de propagation qui sont orthogonaux l'un à l'autre.

6. Procédé selon la revendication 5, dans lequel les deux ondes ou impulsions d'ondes (5) (3) sont propagées parallèlement à la surface de l'élément porteur de couple (10) dans des sens (1,2) à sensiblement 45° par rapport à l'axe longitudinal de l'arbre.

7. Procédé selon la revendication 2, dans lequel les deux ondes ou impulsions d'ondes (3) ont un trajet commun qui s'étend le long d'un rayon ou d'une partie d'un rayon de l'élément porteur de couple (10).

8. Procédé selon la revendication 7, comprenant la génération d'une onde ou impulsion d'onde unique qui se divise en deux ondes ou impulsions d'ondes constituantes polarisées orthogonalement (3), lesdites ondes ou impulsions d'ondes constituantes formant lesdites deux ondes ou impulsions d'ondes ayant des sens de polarisation qui sont orthogonaux l'un à l'autre.

9. Dispositif de mesure de couple pour mesurer le couple transmis par un élément émetteur de couple, le dispositif comprenant un ou des générateurs d'ondes (12, 14, 18) pour générer deux ondes ou impulsions d'ondes acoustiques (3, 5) à travers au moins une partie de l'élément émetteur de couple ou le long de la surface de l'élément émetteur de couple (10), et un moyen pour mesurer la différence entre les temps pris par les ondes ou impulsions d'ondes pour parcourir une distance prédéterminée.

10. Dispositif selon la revendication 9, dans lequel le générateur d'ondes (12) comprend un moyen pour générer deux ondes ou impulsions d'ondes ayant des sens de polarisation qui sont orthogonaux l'un à l'autre.

11. Dispositif selon la revendication 9 ou 10, dans lequel le générateur d'ondes (14, 18) comprend un moyen pour générer deux ondes ou impulsions d'ondes ayant des sens de propagation qui sont différents l'un de l'autre.

12. Dispositif selon la revendication 11, dans lequel le générateur d'ondes (14, 18) comprend un moyen pour générer deux ondes ou impulsions d'ondes ayant des sens (1,2) de propagation qui ont orthogonaux l'un à l'autre.

13. Dispositif selon la revendication 10, dans lequel le générateur d'ondes comprend un moyen pour générer deux ondes ou impulsions d'ondes (3) ayant un trajet commun.

14. Dispositif selon l'une quelconque des revendications 9 à 13, comprenant en outre un ou des détecteurs d'ondes 12, 16 22) pour détecter les ondes générées par le ou les générateurs d'ondes, et un circuit de minuterie pour mesurer la différence des temps pris par les ondes ou impulsions d'ondes pour se propager depuis le ou les générateurs d'ondes jusqu'au(x) détecteur(s) d'ondes.

15. Dispositif selon l'une quelconque des revendications 9 à 14, dans lequel un générateur d'ondes est l'un d'un transducteur acoustique électromagnétique, d'un transducteur piézoélectrique ou d'une source laser pulsée.

16. Dispositif selon la revendication 15, dans lequel un détecteur d'ondes est un transducteur acoustique électromagnétique ou un transducteur piézoélectrique.
